# EUROPEAN PATENT SPECIFICATION

(11) **EP 2 995 368 B1**
(45) Date of publication and mention of the grant of the patent: **19.08.2020**
(21) Application number: 15153186.0
(22) Date of filing: 30.01.2015
(51) Int. Cl.: B01D 67/00, B01D 71/02, C25D 11/18

(54) **METHOD FOR MANUFACTURING NANOHOLES AND FILTER MANUFACTURED BY THE SAME**
VERFAHREN ZUR HERSTELLUNG VON NANOLÖCHERN UND FILTER DAMIT
PROCÉDÉ DE FABRICATION DE NANOTROUS ET FILTRE FABRIQUÉ PAR CE DERNIER

(30) Priority: 12.09.2014 KR 20140121300
(43) Date of publication of application: 16.03.2016
(73) Proprietor: Korea Institute Of Machinery & Materials, Yuseong-gu Daejeon 305-343 (KR)
(72) Inventor: Yoon, Jae-Sung, Daejeon 305-343 (KR); Yoo, Yeong-Eun, Daejeon 305-343 (KR); Kim, Jeong-Hwan, Daejeon 305-343 (KR); Choi, Doo-Sun, Daejeon 305-343 (KR)
(74) Representative: Delorme, Nicolas

(56) References cited:
- JP-A- S6 414 875
- JP-A- 2005 144 363
- JP-A- 2008 027 676
- US-A- 3 022 187
- US-A1- 2008 006 574
- US-B1- 6 613 241

## Description

### BACKGROUND OF THE INVENTION

### (a) Field of the Invention

The present invention relates to a method for manufacturing nanoholes and a filter manufactured by the same, and more particularly, to a method for manufacturing nanoholes, the method being capable of easily manufacturing nanoholes with a size of several to hundreds of nanometers, and to a filter manufactured by the same.

### (b) Description of the Related Art

A nanohole refers to a pore or passage having a nanoscale width, and is used in various fields, such as for a computing device and a memory device.

It has been reported until now that such nanoholes are arranged by colloidal lithographic etching, nanoimprint lithography, the use of an anodic aluminum oxide template, and block copolymer-based optical lithographic patterning processes.

However, such methods employ separate apparatuses or methods enabling nanoscale patterning, and thus have problems of requiring a lot of time and complicated processes, and there are technical and commercial limitations in manufacturing nanoholes with a diameter of 20 nm or smaller.

For example, in cases where nanoholes are manufactured through mechanical processing, the sizes of tools are restricted, and in cases of photolithography, the shape limit of a photosensitive film is at least 1 µm due to optical diffraction of a photo-mask. Therefore, it is, in fact, difficult to realize several nanometer-sized nanoholes through the above techniques.

Moreover, when a filter capable of collecting nanoscale particles is manufactured, current techniques enable the manufacture of holes of tens of nanometers, but it is difficult to manufacture filters having holes with a size of below such sizes, that is, of several nanometers.
<Related cited document 1> Korean Patent Registration No. 10-1408194
<Related cited document 2> Korean Patent Registration No. 10-10-1399459

It is known from document US6613241 a method of introducing porous membranes into MEMS elements by supporting the membranes by frames to form an heterostructure and the apparatus made by the method. This is achieved by attaching to a structured or porous substrate one or more monolithically fabricated frames and membranes. Having membranes disposed on frames enables them to be batch processed and facilitates separation, handling and mounting within MEMS or nanofluidic systems. Applications include, but are not limited to, filters for gases or liquids, electron transmissive windows and scanning electron microscopy (SEM) accessible arrays of nanotest tubes containing liquid phases and other sample states.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a method for manufacturing nanoholes and a filter manufactured by the same, having advantages of easily and simply manufacturing nanoholes with a scale of several nanometers or less.

The present invention provides a method for manufacturing nanoholes as defined in claim 1.

In the particle injecting step, a plurality of kinds of particles with different sizes may be injected into the through-hole.

In the particle injecting step, the same kind of particles with the same size may be injected into the through-hole.

The present invention provides a filter as defined in claim 5.

The size of the nanoholes may be controlled by adjusting the size of particles injected into the through-hole.

The particles may have electrically positive or negative polarity by binding to a functional group.

### BRIEF DESCRIPTION OF THE DRAWINGS

FIG. 1 is a process flowchart schematically showing a method for manufacturing nanoholes according a first embodiment of the present invention;
FIG. 2 is a front view schematically illustrating a preparing step in the method for manufacturing nanoholes shown in FIG. 1;
FIG. 3 is a view illustrating a state in which particles with the same size are injected in the particle injecting step in the method for manufacturing nanoholes shown in FIG. 1;
FIG. 4 is a view illustrating a state in which particles with different sizes are injected in the particle injecting step in the method for manufacturing nanoholes shown in FIG. 1;
FIG. 5 is a view schematically showing the binding of a functional group to a particle surface in the particle injecting step in the method for manufacturing nanoholes shown in FIG. 1;
FIG. 6 is a view schematically showing a state in which an electric double layer is formed by injecting charged particles in the particle injecting step in the method for manufacturing nanoholes shown in FIG. 1;
FIG. 7 is a process flowchart schematically showing a method for manufacturing nanoholes according a second embodiment of the present invention;
FIG. 8 is a view schematically illustrating an outlet reducing step in the method for manufacturing nanoholes shown in FIG. 7;
FIG. 9 is a view schematically showing a filter according to an embodiment of the present invention; and
FIG. 10 is an image showing an enlarged external surface of anodic aluminum oxide used as a filter part of the filter shown in FIG. 9.

**- Explanation of reference numerals -**

| | |
|---|---|
| 10: body | 20: particle |
| S100: nanohole preparing step | S110: preparing step |
| S120: particle injecting step | |
| S200: nanohole preparing step | S215: outlet reducing step |
| 300: filter | 310: filter part |
| 320: particle | |

### DETAILED DESCRIPTION OF THE EMBODIMENTS

The present invention will be described more fully hereinafter with reference to the accompanying drawings, in which embodiments of the invention are shown. The drawings and description are to be regarded as illustrative in nature and not restrictive. Like reference numerals designate like elements throughout the specification.

Prior to descriptions, in the embodiments, elements having the same configuration are denoted by the same reference numerals and will be described representatively in a first embodiment, and only configurations different from those of the first embodiment will be described in the other embodiments.

Hereinafter, a method S100 for manufacturing nanoholes according to a first embodiment of the present invention will be described with reference to the accompanying drawings.

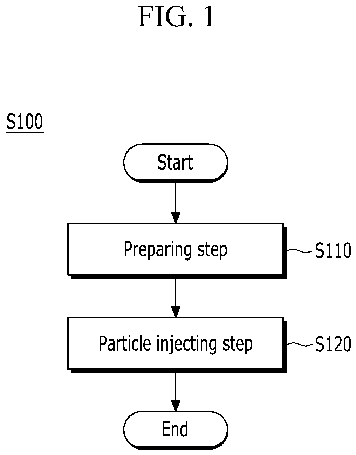

FIG. 1 is a process flowchart schematically showing a method for manufacturing nanoholes according a first embodiment of the present invention.

Referring to FIG. 1, according to the method S100 for manufacturing nanoholes according to the first embodiment of the present invention, particles with a smaller size than a nano- or micro-scale through-hole 11 are injected into the through-hole 11, and as a result, nanoholes 30 with a size of several nanometers or smaller can be manufactured, wherein the method comprises a preparing step S110 and a particle injecting step S120.

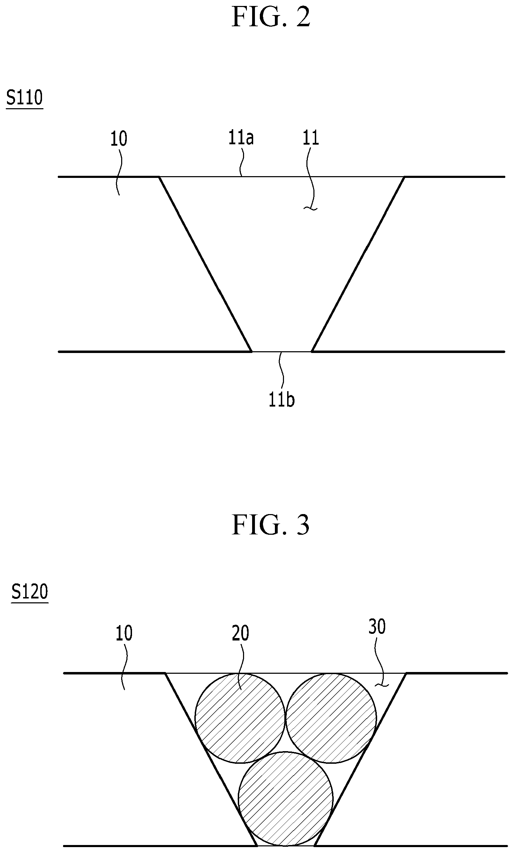

FIG. 2 is a front view schematically illustrating a preparing step in the method for manufacturing nanoholes shown in FIG. 1.

Referring to FIG. 2, in the preparing step S110, a body 10 which passes through two facing surfaces and has a through-hole 11 with a nano- or micro-scale diameter is prepared.

Here, the through-hole 11 is formed to pass through upper and lower surfaces of the body 10, or right and left surfaces of the body 10.

In the first embodiment of the present invention, the through-hole 11 is prepared such that, based on a direction in which particles 20 are injected in the below-described particle injecting step S120, an inlet 11a, through which the particles 20 are injected, and an outlet 11b, which is opposite to the inlet 11a, are asymmetric.

More specifically, the shape of the inlet 11a and the shape of the outlet 11b may be asymmetric to each other by differently preparing the diameter of the inlet 11a and the diameter of the outlet 11b.

That is, the diameter of the inlet 11a is prepared to be larger than the diameter of the outlet 11b, thereby preventing the particles 20 injected in the particle injecting step S120 from leaving through the outlet 11b.

Here, the diameter of the outlet 11b is smaller than the diameter of the particles 20 injected in the below-described particle injecting step S120, but is not limited thereto.

In the particle injecting step S120, particles with a smaller diameter than the through-hole 11 are injected into the through-hole 11, thereby manufacturing nanoholes with a smaller scale than the through-hole 11.

That is, the particles 20 are injected into the through-hole 11, and thus nanoholes 30 are formed by pores formed between the particles 20.

Here, nanoholes 30 with a user-desired size can be manufactured by selecting the kind of injected particles 20.

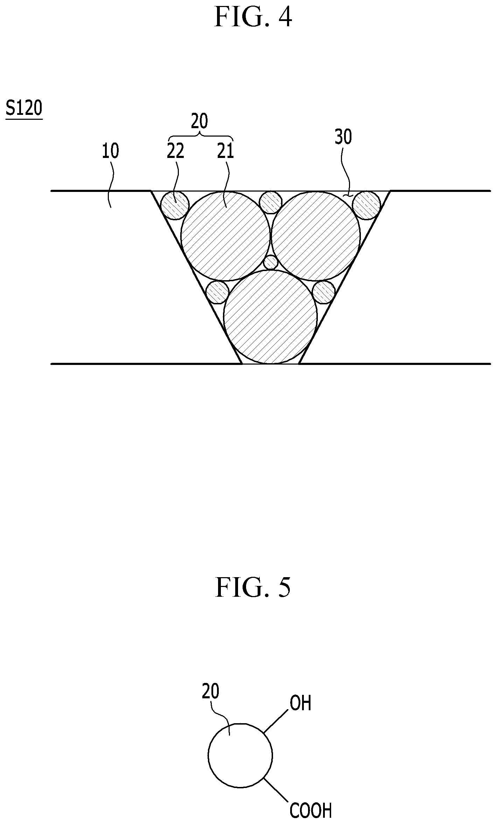

FIG. 3 is a view illustrating a state in which particles with the same size are injected in the particle injecting step in the method for manufacturing nanoholes shown in FIG. 1, and FIG. 4 is a view illustrating a state in which particles with different sizes are injected in the particle injecting step in the method for manufacturing nanoholes shown in FIG. 1.

For example, as shown in FIG. 3, when it is assumed that the particles 20 injected into the through-hole 11 have the same size, nanoholes 30 having a constant size that is smaller than the diameter of the injected particles 20 can be manufactured.

That, when it is assumed that the particles 20 have a completely circular shape, nanoholes 30 with a user-desired size can be manufactured by selecting the size of injected particles 20

According to the first embodiment of the present invention, the particles injected in the particle injecting step S120 may be a plurality of kinds of particles with different sizes.

For example, as shown in FIG. 4, first particles 21 and second particles 22 having a smaller diameter than the first particles 21 may be simultaneously or sequentially injected into the through-hole 11. As such, when the first particles 21 and the second particles 22 are injected into the through-hole 11, the second particles 22 are disposed in pores formed in a state in which the first particles 21 are arranged, and thus nanoholes 30 with a more minute scale can be formed when compared with the case in which only the first particles are injected.

Here, for the convenience of description, the present embodiment exemplifies the provision of two kinds of particles, that is, the first particles 21 and the second particles 22 having different sizes, but it is not limited thereto, and thus more minute nanoholes 30 can be manufactured by using two or more kinds of particles.

Further, when the injected particles 20 are several nanometer-level nanoparticles, the nanoholes 30 formed in the first embodiment of the present invention may have a pico-scale size.

According to the first embodiment of the present invention, the particles injected in the particle injecting step S120 may be electrically or chemically treated particles. That is, particles that are surface-functionalized by an electrical or chemical treatment may be injected into the through-hole 11.

Here, for the particles that are surface-functionalized by an electrical or chemical treatment, several methods that are conventionally disclosed may be utilized.

As one example of the chemical treatment, the surfaces of the particles 20 may be positively charged using a peptide. That is, the peptide may bind to the surfaces of the particles 20 by providing a functional group, such as a hydroxyl group (OH) or a carboxyl group (COOH), to the surfaces of the particles 20.

FIG. 5 is a view schematically showing the binding of a functional group to a particle surface in the particle injecting step in the method for manufacturing nanoholes shown in FIG. 1.

Such a peptide has electrically positive (+) polarity since hydrogen is separated from a functional group, such as a hydroxyl group (OH) or a carboxyl group (COOH), and thus can limit the kind of particles which can pass through nanoholes 30.

As one example of the electrical treatment, the particles 20 may be injected into the through-hole 11 while the particles are charged, so that an electrically charged electric double layer is formed on surfaces of the particles.

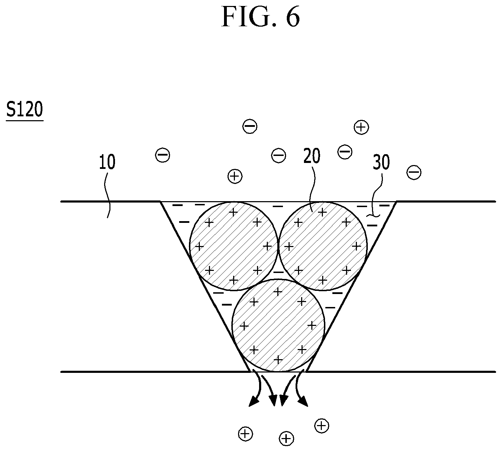

FIG. 6 is a view schematically showing a state in which an electric double layer is formed by injecting charged particles in the particle injecting step in the method for manufacturing nanoholes shown in FIG. 1.

Referring to FIG. 6, the term electric double layer refers to a phenomenon in which charges are naturally formed along the particle, and a phenomenon in which charges having opposite polarity to charges formed on the particle form a layer around the charge. For example, when the surface of the particle 20 is positively (+) charged, a layer having negative (-) polarity is formed around the particle 20.

Thus, electrically negative (-) particles have limitations in passing through the nanohole 30, and only electrically positive (+) or neutral particles can pass through the nanohole 30.

The above-described embodiment exemplifies that the particles 20 are surface-functionalized through an electric or chemical treatment, but is not limited thereto, and thus the conventionally known various methods can be utilized.

Next, a method S200 for manufacturing nanoholes according to a second embodiment of the present invention will be described.

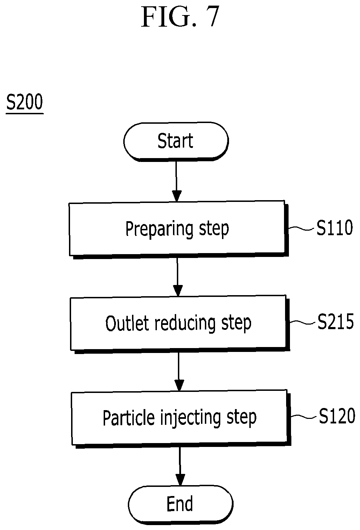

FIG. 7 is a process flowchart schematically showing a method for manufacturing nanoholes according a second embodiment of the present invention.

Referring to FIG. 7, in the method S200 for manufacturing nanoholes according to the second embodiment of the present invention, particles with a smaller size than a nano- or micro-scale through-hole 11 are injected into the through-hole 11, and as a result, nanoholes 30 with a size of several nanometers or smaller can be manufactured, wherein the method includes a preparing step S110, an inlet reducing step S215, and a particle injecting step S120.

Since the preparing step S110 is substantially the same as that in the first embodiment, a description thereof will be omitted.

However, the present embodiment is different from the first embodiment in that a body 10 including a through-hole 11 of which an inlet 11a and an outlet 11b are symmetric to each other is utilized.

More specifically, the body 10 of the second embodiment includes the through-hole 11 having a structure in which the shape of the inlet 11a and the shape of the outlet 11b correspond to each other by forming the inlet 11a and the outlet 11b to have the same diameter.

Further, the through-hole 11 may be formed such that the diameter of the inlet 11a and the diameter of the outlet 11b are the same, and more preferably, the center of the inlet 11a and the center of the outlet 11b are on the same central axis.

However, according to such a structure, particles 20 injected in the below-describing particle injecting step (S120) can naturally leave through the outlet 11b.

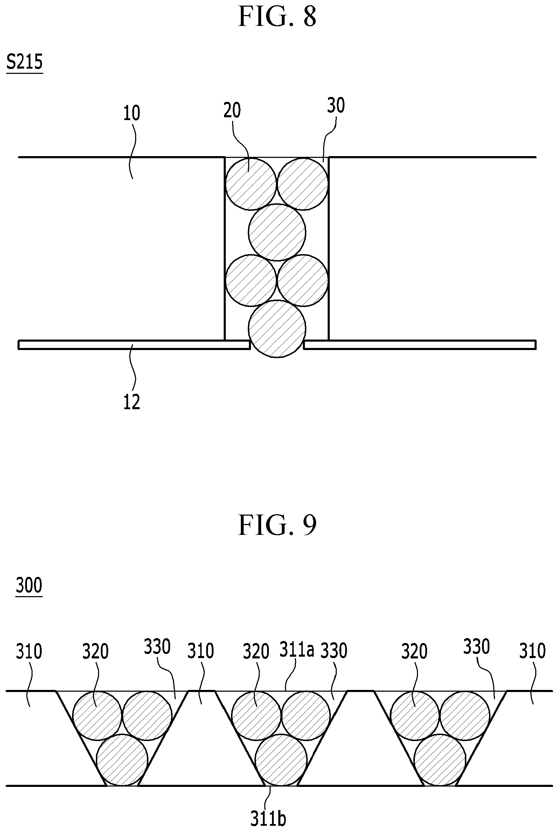

FIG. 8 is a view schematically illustrating an outlet reduction step in the method for manufacturing nanoholes shown in FIG. 7.

Referring to FIG. 8, in the outlet reducing step S215, as described above, in cases where the through-hole 11 has a symmetric structure, an outlet reducing member 12 for shielding a part of the outlet 11b is provided on a surface of the body in which the outlet 11b is formed, in order to prevent the particles from leaving through the outlet 11b.

According to the second embodiment of the present invention, in the outlet reducing step S215, the outlet reducing member 12 having a penetration hole formed on an external surface thereof is attached to the surface of the body 10 in which the outlet 11b is formed.

Here, the size of the penetration hole of the outlet reducing member 12 may be similar to or smaller than that of the outlet 11b. That is, the outlet reducing member 12 is attached to the surface of the body 10 in which the outlet 11b is formed, thereby shielding a part of the outlet 11b. Therefore, the outlet reducing member 12 prevents the particles 20 from passing through the outlet 11b and leaving the through-hole 11.

That is, without being limited thereto, if the penetration hole of the outlet reducing member 12 has a larger size than the outlet 11b, the size of the outlet 11b can be reduced by disposing the penetration hole of the outlet reducing member 12 and the outlet 11b to be oblique to each other, that is, partially overlapping the outlet 11b and a region of the outlet reducing member 12 in which the penetration hole is not formed.

However, the reducing of the size of the outlet is not limited to the above methods. The outlet reducing step S215 according to the second embodiment of the present invention may be performed as long as a predetermined material is bonded on the edge of the outlet 11b or the size of the outlet 11b is reduced by any other method.

Since the particle injecting step S120 is substantially the same as that in the first embodiment, a description thereof will be omitted.

Next, a filter 300 according to an embodiment of the present invention will be described.

FIG. 9 is a view schematically showing a filter according to an embodiment of the present invention.

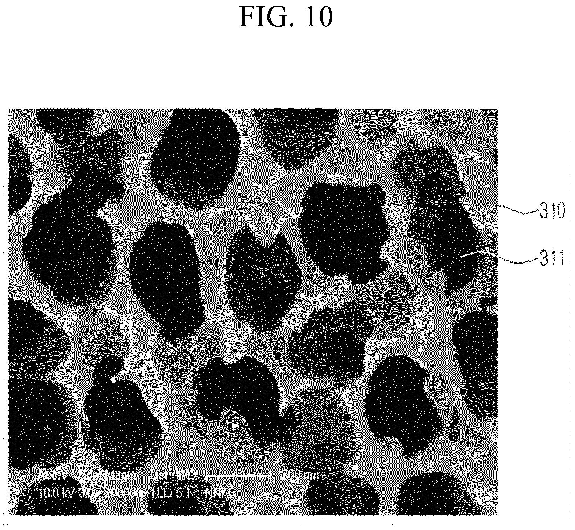

FIG. 10 is an image showing an enlarged external surface of anodic aluminum oxide used as a filter part of the filter shown in FIG. 9.

Referring to FIG. 9, a filter 300 according to an embodiment of the present invention has nanoholes manufactured by the method for manufacturing nanoholes according to the above-described first or second embodiment, and includes a filter part 310 and particles 320.

Referring to FIG. 10, the filter part 310 has a plurality of through-holes 311 passing through external surfaces thereof, contaminants are filtered by the through-holes 311, and thus purified air can be exhausted.

Here, the through-holes 311 have a scale of tens to hundreds of nanometers, and can filter minute particles with a larger scale than the through-holes 311.

Referring to FIG. 10, according to an embodiment of the present invention, the filter part 310 may be prepared by an anodic aluminum oxidation filter. Here, in the anodic aluminum oxide filter, an inlet 311a and an outlet 311b of the through-hole 311 are asymmetric, and thus even though particles 320 are injected through the inlet 311a, the particles 320 do not leave through the outlet 311b due to the structural characteristics of the through-hole 311.

Without being limited to, a through-hole 311 having a symmetric structure as described in the methods (S100 and S200) for manufacturing nanoholes according to the first and second embodiments may be used.

The particles 320 are inserted into the through-hole 311 to reduce the scale of the through-hole 311 to the several nano-scales or pico-scales. As described in the methods S100 and S200 for manufacturing nanoholes according to the first and second embodiments, a part of the through-hole 311 is shielded by the particles 310 placed inside the through-hole 311, and thus nanoholes 330 having a smaller scale than the through-hole 311 are manufactured.

Here, the particles may be placed inside the through-hole 311 while being surface-functionalized, and this feature is substantially the same as those in the methods S100 and S200 for manufacturing nanoholes according to the first and second embodiments, and thus a detailed description thereof will be omitted.

However, as for the functional effect thereof, the particles 320 have electrically positive (+) or negative (-) polarity by an electrical or chemical treatment, and thus the filter part 310 can selectively pass through only predetermined materials in air.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A method for manufacturing nanoholes (30), the method comprising:
a preparing step of preparing a body (10) having a through-hole (11) which passes through two facing surfaces and has a nano-scale diameter, the body (10) being an anodic aluminum oxide (AAO) membrane; and
a particle injecting step of injecting particles (20) into the through-hole (11) through an inlet (11a) of the through-hole (11) to form nanoholes (30) with a smaller size than the through-hole (11),
wherein the inlet (11a) and an outlet (11b) opposite to the inlet (11a), are formed in an asymmetric structure,
wherein in the through-hole (11), the diameter of the inlet (11a) is larger than that of the outlet (11b), the diameter of the inlet (11a) is larger than the diameter of the particles (20), and the diameter of the outlet (11b) is smaller than the diameter of the particles (20), so that the particles (20) injected in the particle injecting step do not leave the through-hole (11) through the outlet (11b),
wherein in the particle injecting step, the nanoholes (30) are formed by pores between the particles (20), **characterized in that** a surface of the particles (20) is positively or negatively charged so that an electrically charged electric double layer is formed on the surface of the particle (20) or a region adjacent to the surface.

2. The method of claim 1, wherein in the particle injecting step, a plurality of kinds of particles (20) with different sizes are injected into the through-hole (11).

3. The method of claim 1, wherein in the particle injecting step, the same kind of particles (20) with the same size are injected into the through-hole (11).

4. The method of claim 1, wherein in the particle injecting step, the particles have electrically positive or negative polarity by an electrical or chemical treatment.

5. A filter comprising:
a filter part having a through-hole (11) which penetrates two facing surfaces and has a nano-scale diameter; and
particles (20) injected into the through-hole (11) through an inlet (11a) of the through-hole (11),
wherein the inlet (11a) and an outlet (11b) opposite to the inlet (11a), are formed in an asymmetric structure,
wherein in the through-hole (11), the diameter of the inlet (11a) is larger than that of an outlet (11b), which is opposite to the inlet (11a), the diameter of the inlet (11a) is larger than the diameter of the particles (20), and the diameter of the outlet (11b) is smaller than the diameter of the particles (20), so that the particles (20) injected into the through-hole (11) do not leave the through-hole (11) through the outlet (11b),
wherein the filter part is an anodic aluminum oxide (AAO) membrane,
wherein the filter part has nanoholes (30) with a smaller size than the through-hole (11) by the particles (20) injected into the through-hole (11),
wherein the nanoholes (30) are pores between the particles (20), **characterized in that** a surface of the particles (20) is positively or negatively charged so that an electrically charged electric double layer is formed on the surface of the particle (20) or a region adjacent to the surface.

6. The filter of claim 5, wherein the size of the nanoholes (30) is controlled by adjusting the size of particles (20) injected into the through-hole (11).

7. The filter of claim 5, wherein the particles (20) have electrically positive or negative polarity by binding to a functional group.

## Patentansprüche

1. Verfahren zur Herstellung von Nanolöchern (30), wobei das Verfahren umfasst:
einen Vorbereitungsschritt zum Vorbereiten eines Körpers (10), der ein Durchgangsloch (11) aufweist, das durch zwei einander zugewandten Oberflächen verläuft und einen nanoskaligen Durchmesser aufweist, wobei der Körper (10) eine Membran aus anodischem Aluminiumoxid (AAO) ist; und
einen Partikelinjektionsschritt zum Injizieren von Partikeln (20) in das Durchgangsloch (11) durch einen Einlass (11a) des Durchgangslochs (11), um Nanolöcher (30) mit einer kleineren Größe als das Durchgangsloch (11) zu bilden,
wobei der Einlass (11a) und ein Auslass (11b) gegenüber dem Einlass (11a) in einer asymmetrischen Struktur gebildet sind,
wobei in dem Durchgangsloch (11) der Durchmesser des Einlasses (11a) größer ist als jener des Auslasses (11b), der Durchmesser des Einlasses (11a) größer ist als der Durchmesser der Partikel (20) und der Durchmesser des Auslasses (11b) kleiner ist als der Durchmesser der Partikel (20), sodass die Partikel (20), die in dem Partikelinjektionsschritt injiziert werden, das Durchgangsloch (11) durch den Auslass (11b) nicht verlassen,
wobei in dem Partikelinjektionsschritt die Nanolöcher (30) von Poren zwischen den Partikeln (20) gebildet werden,
**dadurch gekennzeichnet, dass** eine Oberfläche der Partikel (20) positiv oder negativ geladen ist, sodass eine elektrisch geladene, elektrische Doppelschicht auf der Oberfläche des Partikels (20) oder einem Bereich angrenzend an die Oberfläche gebildet wird.

2. Verfahren nach Anspruch 1, wobei in dem Partikelinjektionsschritt eine Vielzahl von Arten von Partikeln (20) mit unterschiedlichen Größen in das Durchgangsloch (11) injiziert wird.

3. Verfahren nach Anspruch 1, wobei in dem Partikelinjektionsschritt die gleiche Art von Partikeln (20) mit der gleichen Größe in das Durchgangsloch (11) injiziert wird.

4. Verfahren nach Anspruch 1, wobei in dem Partikelinjektionsschritt die Partikel eine positive oder negative Polarität durch eine elektrische oder chemische Behandlung aufweisen.

5. Filter, umfassend:
einen Filterteil, der ein Durchgangsloch (11) aufweist, das in zwei einander zugewandte Oberflächen eindringt und einen nanoskaligen Durchmesser aufweist; und
Partikel (20), die in das Durchgangsloch (11) durch einen Einlass (11a) des Durchgangslochs (11) injiziert werden,
wobei der Einlass (11a) und ein Auslass (11b) gegenüber dem Einlass (11a) in einer asymmetrischen Struktur gebildet sind,
wobei in dem Durchgangsloch (11) der Durchmesser des Einlasses (11a) größer ist als jener des Auslasses (11b), der dem Einlass (11a) gegenüber liegt, der Durchmesser des Einlasses (11a) größer ist als der Durchmesser der Partikel (20) und der Durchmesser des Auslasses (11b) kleiner ist als der Durchmesser der Partikel (20), sodass die Partikel (20), die in das Durchgangsloch (11) injiziert werden, das Durchgangsloch (11) durch den Auslass (11b) nicht verlassen,
wobei der Filterteil eine Membran aus anodischem Aluminiumoxid (AAO) ist,
wobei der Filterteil Nanolöcher (30) mit einer kleineren Größe als das Durchgangsloch (11) durch die Partikel (20) aufweist, die in das Durchgangsloch (11) injiziert werden,
wobei die Nanolöcher (30) Poren zwischen den Partikeln (20) sind,
**dadurch gekennzeichnet, dass** eine Oberfläche der Partikel (20) positiv oder negativ geladen ist, sodass eine elektrisch geladene, elektrische Doppelschicht auf der Oberfläche des Partikels (20) oder einem Bereich angrenzend an die Oberfläche gebildet wird.

6. Filter nach Anspruch 5, wobei die Größe der Nanolöcher (30) gesteuert wird, indem die Größe der Partikel (20), die in das Durchgangsloch (11) injiziert werden, angepasst wird.

7. Filter nach Anspruch 5, wobei die Partikel (20) eine elektrisch positive oder negative Polarität aufweisen, indem sie sich an eine funktionelle Gruppe binden.

## Revendications

1. Procédé de fabrication de nano-trous (30), le procédé comprenant :
une étape de préparation consistant à préparer un corps (10) ayant un trou traversant (11) qui traverse deux surfaces en regard et a un diamètre nanométrique, le corps (10) étant une membrane d'oxyde d'aluminium anodique (AAO) ; et
une étape d'injection de particules consistant à injecter des particules (20) dans le trou traversant (11) à travers une entrée (11a) du trou traversant (11) pour former des nano-trous (30) ayant une taille inférieure au trou traversant (11),
dans lequel l'entrée (11a) et une sortie (11b) opposée à l'entrée (11a), sont formées dans une structure asymétrique,
dans lequel, dans le trou traversant (11), le diamètre de l'entrée (11a) est supérieur à celui de la sortie (11b), le diamètre de l'entrée (11a) est supérieur au diamètre des particules (20) et le diamètre de la sortie (11b) est inférieur au diamètre des particules (20), de sorte que les particules (20) injectées dans l'étape d'injection de particules ne quittent pas le trou traversant (11) par la sortie (11b),
dans lequel, dans l'étape d'injection de particules, les nano-trous (30) sont formés par des pores entre les particules (20), **caractérisé en ce que**
une surface des particules (20) est chargée positivement ou négativement de sorte qu'une double couche électrique chargée électriquement soit formée sur la surface de la particule (20) ou une région adjacente à la surface.

2. Procédé de la revendication 1, dans lequel dans l'étape d'injection de particules, une pluralité de types de particules (20) ayant des tailles différentes sont injectés dans le trou traversant (11).

3. Procédé de la revendication 1, dans lequel dans l'étape d'injection de particules, le même type de particules (20) ayant la même taille est injecté dans le trou traversant (11).

4. Procédé de la revendication 1, dans lequel dans l'étape d'injection de particules, les particules ont une polarité électriquement positive ou négative par un traitement électrique ou chimique.

5. Filtre comprenant :
une partie de filtre ayant un trou traversant (11) qui pénètre deux surfaces en regard et a un diamètre nanométrique ; et
des particules (20) injectées dans le trou traversant (11) à travers une entrée (11a) du trou traversant (11),
dans lequel, l'entrée (11a) et une sortie (11b) opposée à l'entrée (11a), sont formées dans une structure asymétrique,
dans lequel, dans le trou traversant (11), le diamètre de l'entrée (11a) est supérieur à celui d'une sortie (11b), qui est opposée à l'entrée (11a), le diamètre de l'entrée (11a) est supérieur au diamètre des particules (20) et le diamètre de la sortie (11b) est inférieur au diamètre des particules (20), de sorte que les particules (20) injectées dans le trou traversant (11) ne quittent pas le trou traversant (11) par la sortie (11b),
dans lequel, la partie de filtre est une membrane d'oxyde d'aluminium anodique (AAO),
dans lequel, la partie de filtre a des nano-trous (30), ayant une taille inférieure à celle du trou traversant (11), lorsque les particules (20) sont injectées dans le trou traversant (11),
dans lequel, les nano-trous (30) sont des pores entre les particules (20), **caractérisés en ce que**
une surface des particules (20) est chargée positivement ou négativement de sorte qu'une double couche électrique chargée électriquement soit formée sur la surface de la particule (20) ou une région adjacente à la surface.

6. Filtre de la revendication 5, dans lequel la taille des nano-trous (30) est contrôlée en régulant la taille de particules (20) injectées dans le trou traversant (11).

7. Filtre de la revendication 5, dans lequel les particules (20) ont une polarité électriquement positive ou négative en se liant à un groupe fonctionnel.
